Europäisches Patentamt

European Patent Office

Office européen des brevets

(11) Veröffentlichungsnummer: **0 534 225 B1**

## (12) EUROPÄISCHE PATENTSCHRIFT

(45) Veröffentlichungstag der Patentschrift: 23.08.95

(51) Int. Cl.6: **C04B 7/43**, F27B 7/38

(21) Anmeldenummer: **92115309.4**

(22) Anmeldetag: **08.09.92**

(54) **Anlage zur thermischen Behandlung von mehlförmigen Rohmaterialien.**

(30) Priorität: **27.09.91 DE 4132167**

(43) Veröffentlichungstag der Anmeldung:
**31.03.93 Patentblatt 93/13**

(45) Bekanntmachung des Hinweises auf die
Patenterteilung:
**23.08.95 Patentblatt 95/34**

(84) Benannte Vertragsstaaten:
**AT BE DE DK ES FR GB IT NL SE**

(56) Entgegenhaltungen:
**WO-A-83/03601**
**DE-A- 2 746 331**
**GB-A- 2 118 924**

(73) Patentinhaber: **Klöckner-Humboldt-Deutz Aktiengesellschaft
Nikolaus-August-Otto-Allee 2
D-51149 Köln (DE)**

(72) Erfinder: **Bauer, Claus
Börschsgarten 18
W-5000 Köln 90 (DE)**

**Beschreibung**

Die Erfindung betrifft eine Anlage zur thermischen Behandlung von mehlförmigen Rohmaterialien, insbesondere bei der Herstellung von Zementklinker aus Rohmehl, das in wenigstens einem von Abgas eines Drehrohrofens durchströmten Zyklonschwebegas-Wärmetauscherstrang vorerhitzt und in der Sinterzone des Drehrohrofens zu Zementklinker gebrannt wird, der in einem nachgeschalteten Kühler gekühlt wird, mit einem Teilgasabzug zum Abzug eines schadstoffhaltigen Teilstromes des Drehofenabgases mit Kühlung und Entstaubung des abgezogenen Teilgasstroms.

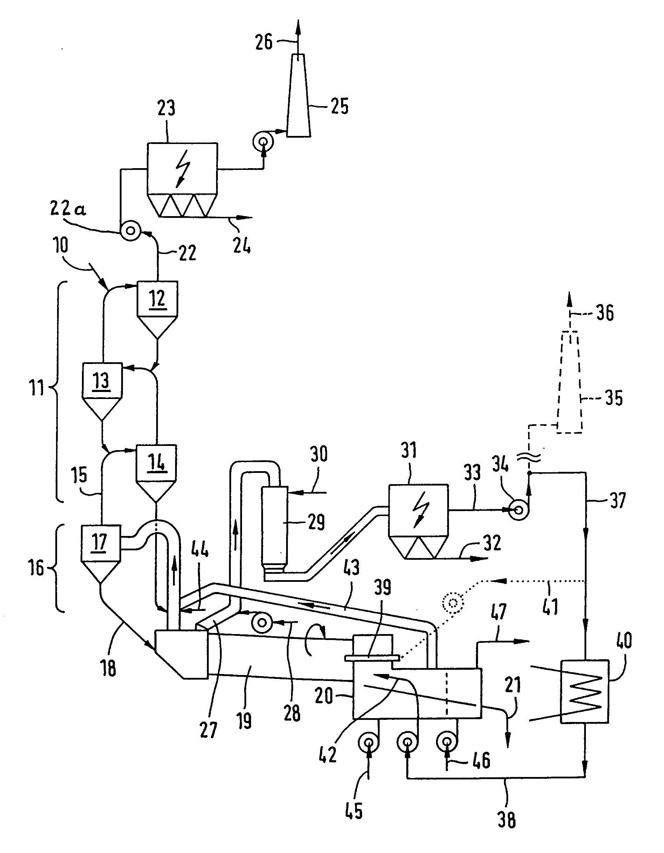

In der Zementtechnologie ist es bekannt, daß viele Einsatzstoffe zur Zementklinkerherstellung Nebenbestandteile wie z. B. Alkaliverbindungen, Schwefel, Chlor, Schwermetalle etc. enthalten, die im Bereich der Sinterzone zum Teil verdampfen, im Vorwärmerbereich wieder kondensieren und somit Kreisläufe aufbauen, wodurch sowohl die Qualität des Zementklinkers ungünstig beeinflußt als auch der Brennprozeß selbst erheblich gestört werden kann. Zur Unterbindung beispielsweise eines Alkalikreislaufs in einer Zementklinker-Brennanlage sowie zur Reduzierung des Alkaligehalts im Zementklinker ist es bekannt, durch einen sogenannten Teilgasabzug einen Teil der schadstoffhaltigen Ofenabgase am unteren Bereich des Abgassteigrohres zwischen Drehrohrofen und Schwebegasvorwärmer abzuzweigen und abzuführen, und zwar bei einem Temperaturniveau, bei welchem die flüchtigen Schadstoffe noch nicht oder nur teilweise kondensiert sind. Sind dabei das abgezogene Teilgas sowie der erfaßte Ofenstaub hochalkalihaltig, müssen das Teilgas sowie der aus diesem nach Abkühlung abgeschiedene Ofenstaub verworfen werden (Aufsatz "Probleme der Elektroentstaubung hochalkalichloridhaltiger Abgase aus Teilgasabzügen bei Wärmetauscher-Trockendrehöfen" in Fachzeitschrift Zement-Kalk-Gips, Nr. 5/1978, Seiten 236 bis 238, Bild 2, 3 und 4).

Die dort bekannten Zementklinker-Brennanlagen mit Teilgasabzug weisen zwei Kamine auf, nämlich einen Hauptkamin zum Abzug des am zu erhitzenden Zementrohmehl abgekühlten und entstaubten Abgases des Wärmetauscherstrangs, und einen eigenen Kamin zum Abzug des Teilgasstroms, der vorher durch Frischluftzumischung und Wassereindüsung auf ca. 150 °C abgekühlt und dann in der Regel in einem elektrostatischen Staubabscheider entstaubt worden ist. Die Schadstoffemissionen an den beiden Kaminen unterscheiden sich beträchtlich. Während die Emissionen des Hauptkamins im wesentlichen $CO_2$, CO und Staub sowie in geringen Mengen $NO_x$ und $SO_2$ (z. B. 10 ppm) sind, auch wenn die Anlage nicht mit einer eigenen Abgasentstickungseinrichtung ausgerüstet ist, werden am Kamin des Teilgasabzuges $NO_x$ und $SO_2$ in größeren Mengen aus der Drehofenfeuerung anzutreffen sein. Denn der aus dem Drehofeneinlauf abgezogene Teilgasstrom enthält das $NO_x$ aus der hochtemperierten Sinterzone des Drehrohrofens (Brennerflamme hat ca. 1600°C) sowie verdampfte und im Kreislauf befindliche Schwefeloxide und die flüchtigen Salze, zu deren Abzug aus dem Ofensystem der Teilgasstrom entnommen wird. Durch die hohe Beimischung von Umgebungsluft zwecks Abkühlung des Teilgasstroms werden infolge des Verdünnungseffekts die Konzentrationen von $NO_x$ und $SO_2$ im Teilgasstrom lediglich niedrig gemessen. Es sind Zementklinker-Brennanlagen mit Teilgasabzug in Betrieb, bei denen mehr als 30 % der Drehofenabgase als Teilgas entnommen und nach Entstaubung über den eigenen Kamin in die Umwelt abgeleitet werden, enthaltend aber immer noch z. B. ca. 500 ppm $NO_x$ und ca. 500 ppm $SO_2$. Solche Brennanlagen müßten aus Gründen des Umweltschutzes zukünftig mit einer eigenen Entstickungs- und Entschwefelungseinrichtung für den abgezogenen schadstoffhaltigen Teilgasstrom ausgerüstet sein, was aber sehr aufwendig wäre.

Der Erfindung liegt die Aufgabe zugrunde, bei Zementklinker-Produktionsanlagen mit Teilgasabzug der eingangs genannten Art einen Weg zu finden, wie die Schadstoffemissionen vermindert werden können, ohne den abgezogenen Teilgasstrom in aufwendiger Weise mit einer eigenen Entstickungs- und/oder Entschwefelungseinrichtung ausstatten zu müssen.

Diese Aufgabe wird gemäß der Erfindung mit den Maßnahmen des Kennzeichnungsteils des Anspruchs 1 gelöst.

Bei einer Zementklinker-Produktionslinie mit Teilgasabzug ist der abgezogene schadstoffhaltige Teilgasstrom nach seiner Abkühlung durch Frischluftzumischung hochsauerstoffhaltig, d. h. der Teilgasstrom kann einen Sauerstoffgehalt von ca. 17 % aufweisen. Daher besteht die erfindungsgemäße Problemlösung in absolut neuartiger Weise in einer Zurückführung der Teilgasabzugsleitung zum Klinkerkühler, d. h. in einer Rezirkulierung des abgekühlten hochsauerstoffhaltigen Teilgasstromes in den Klinkerkühler zunächst als Kühlluft. Nachdem dann der vor dem Klinkerkühler abgekühlte rezirkulierte Teilgasstrom im Klinkerkühler als Kühlmedium genutzt worden ist, strömt dieses Kühlmedium in den Drehrohrofen ein und wird dort im Brennprozeß der Sinterzone erneut als Verbrennungsluft, insbesondere Sekundärluft genutzt. Die im rezirkulierten Teilgasstrom enthaltenen Schadstoffe wie $NO_x$ und $SO_2$ vermischen sich mit den entsprechenden Schadstoffen des Drehofenabgases. In dem dem Drehrohrofen materialflußseitig vorgeschalteten Rohmehlvorwärmer wird dann das $SO_2$ an den Kalkkomponenten des Zementrohmehls gebunden, während das $NO_x$ in einer ohnehin vorhandenen Primärentstickung, z. B. in einer mittels De-$NO_x$-Brenner in der

2

Drehofenabgasleitung erzeugten Reduktionszone, und/oder in einer im Bereich des Hauptkamins angeordneten Sekundärentstickung (Katalysator) reduziert werden kann.

Bei der erfindungsgemäßen Anlage ist also eine eigene Einrichtung zur Reinigung des abgezogenen schadstoffhaltigen Teilgasstromes für $NO_x$ und $SO_2$ nicht erforderlich. Die Temperatur des in den Klinkerkühler rezirkulierten Teilgasstromes liegt in der Regel höher als die Frischlufttemperatur, wodurch die Sekundärlufttemperatur für den Brennprozeß des Drehrohrofens in erwünschter Weise angehoben wird. Wird in den abgezogenen Teilgasstrom zwecks dessen Konditionierung für eine elektrostatische Staubabscheidung Wasser eingesprüht, enthält der Teilgasstrom Wasserdampf, welcher bei der Rezirkulierung des Teilgasstromes in die Brennzone des Drehrohrofens dort die Verbrennung von Kohlenstaub als Brennstoff des Drehofenbrenners fördern kann.

Die Erfindung und deren weitere Merkmale und Vorteile werden anhand des in der Zeichnung schematisch dargestellten Ausführungsbeispieles näher erläutert.

Die Zeichnung zeigt eine Anlage zur Herstellung von Zementklinker aus Zementrohmehl, das bei (10) in die Vorwärmstufe (11) aufgegeben wird, wo es nacheinander die Zyklonschwebegas-Wärmetauscher (12 bis 14) im kombinierten Gleich-/Gegenstrom zum heißen Abgas (15) einer Calcinierstufe (16) durchwandert, um im Zyklon (17) vom heißen Abgasstrom (15) abgetrennt und als hochgradig (z. B. 95 %) calciniertes Zementrohmehl (18) in die Einlaufkammer des Drehrohrofens (19) eingeführt zu werden, in dessen Sinterzone es zu Zementklinker gebrannt wird, der anschließend in einem Klinkerkühler (20), im Ausführungsbeispiel ein Schubrostkühler, abgekühlt wird. Der abgekühlte Zementklinker verläßt den Klinkerkühler (20) bei (21).

Das am Zementrohmehl abgekühlte Abgas verläßt die Vorwärmstufe (11) der Anlage bei (22). Dieses Abgas (22) wird in einem Staubabscheider, z. B. elektrostatischen Staubabscheider (23) von Staub (24) befreit und anschließend über einen Hauptkamin (25) als Abgas (26) abgezogen, welches neben $N_2$ und $CO_2$ vergleichsweise geringe Mengen von $NO_x$ und in sehr geringen Mengen, z. B. 10 ppm, $SO_2$ enthält.

An die Einlaufkammer des Drehrohrofens (19) ist eine Teilgasabzugsleitung (27) angeschlossen, durch welche z. B. 5 bis 10 % der Drehofenabgasmenge als heißer schadstoffhaltiger Teilgasstrom abgezogen werden. Der Teilgasstrom wird durch Zumischung von Frischluft (28) zunächst auf ca. 300 bis 400 °C abgekühlt und anschließend in einem Kühlturm (29) durch Einspritzen von Wasser (30) auf ca. 150 °C konditioniert, bevor er dann anschließend in einem Abscheider, z. B. elektrostatischen Staubabscheider (31) von Staub (32) befreit wird. Der entstaubte Teilgasstrom (33) ist von einem Saugzuggebläse (34) bisher zu einem gestrichelt gezeichneten Kamin (35) gefördert worden, von dem er als Abgas (36) mit folgenden Analysenwerten in die Umgebung entlassen worden ist:

| | |
|---|---|
| $O_2$ | 15 bis 17 % |
| $CO_2$ | 4 bis 5 % |
| $NO_x$ | ca. 500 ppm |
| $SO_2$ | ca. 500 ppm |
| Rest hauptsächlich $N_2$ | |

Aus Gründen des Umweltschutzes bedarf ein Abgas (36) mit solchen Analysenwerten zukünftig einer Entstickung und Entschwefelung.

Bei der erfindungsgemäßen Zementklinker-Produktionslinie mit Teilgasabzug ist der in der Zeichnung gestrichelt gezeichnete Kamin (35) nicht mehr erforderlich, denn erfindungsgemäß wird der Abgasstrom (33) nach der Teilgaskühlung und Abgasentstaubung über Leitung (37) zum Klinkerkühler (20) rezirkuliert, wo er zunächst als Kühlmedium bzw. Kühlluft (38) genutzt und dann erneut als Verbrennungsluft (Sekundärluft) dem mit einer Brennerlanze (39) ausgestatteten Brennprozeß des Drehrohrofens (19) zugeführt wird. Zur Erhöhung der Kühlwirkung des rezirkulierten Teilgasstroms (38) kann in diesen ein Gaskühler (40) mit vorzugsweise indirekter Kühlung des Abgasstromes eingeschaltet sein, wodurch der Teilgasstrom von 150 °C auf z. B. 70 °C abgekühlt wird. Von der zum Klinkerkühler (20) führenden Teilgasabzugsleitung (37) kann auch noch eine zum Primärluftkanal des Drehofenbrenners (39) führende in der Zeichnung punktiert gezeichnete Abzweigleitung (41) abgezweigt sein. Durch diese Abzweigleitung (41) kann dem Drehofenbrenner (39) ein Teil des rezirkulierten Teilgasstroms (37) z. B. als Trägergas für Festbrennstoff bzw. als Primärluft zugeführt werden. In diesem Fall kann der Gaskühler (40) zur weiteren Abkühlung des Kühlgases (38) kleiner gebaut werden oder ganz entfallen.

In jedem Fall ist die zum Klinkerkühler (20) rezirkulierte Teilgasabzugsleitung (38) an die Rekuperationszone des Klinkerkühlers angeschlossen und sie mündet an einer solchen Stelle in die Rekuperationszone des Klinkerkühlers ein, daß der Teilgasstrom (38) nach Durchströmen des heißen Zementklinkers im Kühler, wie mit Pfeil 42 angedeutet, in den Drehrohrofen (19) einströmt und nicht in eine gegebenenfalls vorhandene Tertiärluftleitung (43), welche heiße Kühlerabluft zu der mit Brennstoff (44) versorgten Calcinierstufe (16) fördert. Mit (45) und (46) ist Frischluftzufuhr als Kühlluft zum Klinkerkühler (20) angezeigt, während mit (47) der Abzug der in der Zementklinker-Produktionslinie selbst nicht mehr verwertbaren Abluft des Klinkerkühler angezeigt ist.

Die im rezirkulierten Teilgasstrom (38) enthaltenen Schadstoffe $NO_x$ und $SO_2$ vermischen sich beim erneuten Durchströmen des Drehrohrofens (19) mit den dort ohnehin vorhandenen entsprechenden Schadstoffen. Während das $SO_2$ in der Vorwärmstufe (11) an den Kalkkomponenten des Zementrohmehls gebunden wird, wird das $NO_x$ in einer Primärentstickung, z. B. in einer in der Calcinierstufe (16) durch unterstöchiometrische Brennstoffverbrennung geschaffenen Reduktionszone und/oder in einer Sekundärentstickung, z. B. durch katalytische Reduktion im Bereich des Hauptkamins (25) reduziert. Auf diese Weise entfällt eine eigene Entstickung/Entschwefelung des abgezogenen Teilgasstroms.

Die erfindungsgemäße Zementklinker-Produktionslinie mit Teilgasabzug erlaubt auch bei Einsatz sehr schadstoffhaltiger Rohstoffe/Brennstoffe die betriebssichere Herstellung alkaliarmen Zementklinkers, und sie bietet trotzdem den Vorteil der insgesamt reduzierten Schadstoffemission.

Die Erfindung ist nicht auf Zementklinker-Produktionslinien mit Rostkühler als Zementklinkerkühler beschränkt. Ist anstelle des Rostkühlers (20) ein Rohrkühler/ Satellitenkühler vorhanden, wird der rezirkulierte Teilgasstrom (38) direkt in den Rohrkühler/Satellitenkühler eingeblasen bzw. von dem Saugzuggebläse (22a) eingezogen. Außerdem ist die Erfindung anwendbar beim Umbau bzw. bei der Modernisierung vorhandener sogenannter Teilgasabzugs bzw. Bypassanlagen zur Herstellung von Zementklinker mit dem Ziel der reduzierten Schadstoffemission.

*Zahlenbeispiel:*

Vorgaben:

```
2000 t/d Zementklinker ≙ 83333 kg Kli/h
10 % Teilgasabzug bei Stelle (27)
```

|  | $Nm^3/h$ | $Nm^3/kg$ Kli |
|---|---|---|
| Abgas am Ofeneinlauf bei 1200 °C | 41670 | 0,5 |
| Teilgasabzug (27) | 4167 | 0,05 |
| Frischluft (28) als Kühlluft 20 °C | 17550 | 0,21 |
| Mischgas vor Kühlturm (29) 300 °C | 21717 | 0,26 |
| Wassermenge im Kühlturm (29) 1730 kg/h |  |  |
| Abgasmenge vor E-Filter (31) 150 °C | 23875 | 0,286 |
| gesamte Kühlluftmenge zum Klinkerkühler (20) | 191670 | 2,3 |
| Kühlluftmenge zur Rekuperationszone des Klinkerkühlers (20) (Sauerstoffgehalt 20,9 %) | 70833 | 0,85 |

5

|  | $Nm^3/h$ | $Nm^3/kg$ Kli |
|---|---|---|
| Sauerstoffmenge zur Rekuperationszone des Klinkerkühlers (20)   A | 14805 | 0,178 |
| Sauerstoff aus rezirkuliertem Teilgasstrom (38) (17 % $O_2$) | 4058 | 0,049 |
| Sauerstoff aus Luft (Differenz zu  A ) | 10747 | |
| Luftmenge zur Rekuperationszone | 51421 | 0,617 |
| Teilgasabzug (38) zur Rekuperationszone | 23875 | |
| Summe Rekuperationszone | 75296 | 0,9 |

Das heißt, daß infolge der Rezirkulierung des Teilgasstroms (38) die Gasmenge im Drehofen (19) nur um 0,05 $Nm^3$/kg Kli ansteigt, unter Berücksichtigung der Primärluft entspricht das ca. 5 %. Auf die Abgasmenge (26) von ca. 1,8 $Nm^3$/kg Kli am Hauptkamin (25) bezogen entspricht das nur ca. 3 % Abgasmengenerhöhung. Dies ist angesichts der Kosteneinsparung für die Entstickung/Entschwefelung des Teilgasstroms (27, 37, 38) akzeptabel.

**Patentansprüche**

1. Anlage zur thermischen Behandlung von mehlförmigen Rohmaterialien, insbesondere bei der Herstellung von Zementklinker aus Rohmehl, das in wenigstens einem von Abgas eines Drehrohrofens (19) durchströmten Zyklonschwebegas-Wärmetauscherstrang vorerhitzt und in der Sinterzone des Drehrohrofens (19) zu Zementklinker gebrannt wird, der in einem nachgeschalteten Kühler (20) gekühlt wird, mit einem Teilgasabzug (27) zum Abzug eines schadstoffhaltigen Teilstromes des Drehofenabgases mit Kühlung (28, 29) und Entstaubung (31) des abgezogenen Teilgasstroms, dadurch gekennzeichnet, daß die Teilgasabzugsleitung (27, 37, 38) nach der Teilgaskühlung und Teilgasentstaubung zum Klinkerkühler (20) zurückgeführt ist.

2. Anlage nach Anspruch 1, dadurch gekennzeichnet, daß die zum Klinkerkühler (20) rezirkulierte Teilgasabzugsleitung (38) an die Rekuperationszone des Klinkerkühlers angeschlossen ist.

3. Anlage nach Anspruch 2, dadurch gekennzeichnet, daß in die zum Klinkerkühler rezirkulierte Teilgasabzugsleitung (38) vor Einführung in den Klinkerkühler ein Gaskühler (40) eingeschaltet ist.

4. Anlage nach einem der Ansprüche 1 bis 3, dadurch gekennzeichnet, daß von der zum Klinkerkühler (20) rezirkulierten Teilgasabzugsleitung (37) eine zum Primärluftkanal des Drehofenbrenners (39) führende Abzweigleitung (41) abgezweigt ist.

5. Anlage nach Anspruch 2, dadurch gekennzeichnet, daß die zum Klinkerkühler (20) rezirkulierte Teilgasabzugsleitung (38) an einer solchen Stelle in die Rekuperationszone des Klinkerkühlers einmündet, daß der Teilgasstrom in den Drehrohrofen (19) und nicht in die Tertiärluftleitung (43) einströmt.

6

## Claims

1. Plant for the thermal treatment of powdery raw material, especially in the manufacture of cement clinker from raw meal, which is pre-heated in at least one cyclone suspension-type heat exchanger conduit or path through which the waste gas of a cylindrical rotary furnace (19) flows and is burnt to form cement clinker in the sintering zone of the cylindrical rotary furnace (19), the said cement clinker being cooled in a cooler (20) arranged downstream, and the plant being provided with a partial gas flue (27) for the drawing-off of a contaminant-containing partial stream of rotary furnace waste gas with cooling (28, 29) and dedusting (31) of the drawn-off partial gas stream, characterised in that the partial gas flue conduit (27, 37, 38) is returned to the clinker cooler (20) after partial gas cooling and partial gas dedusting.

2. Plant according to claim 1, characterised in that the partial gas flue conduit (38) returned or recirculated to the clinker cooler (20) is connected to the recuperation zone of the clinker cooler.

3. Plant according to claim 2, characterised in that a gas cooler (40) is interposed in the partial gas flue conduit (38) returned or recirculated to the clinker cooler prior to introduction into the clinker cooler.

4. Plant according to any one of claims 1 to 3, characterised in that a branch line (41), leading to the primary air duct of the rotary furnace burner (39), branches from the partial gas flue conduit (37) returned or recirculated to the clinker cooler (20).

5. Plant according to claim 2, characterised in that the partial gas flue conduit (38) returned or recirculated to the clinker cooler (20) opens into the recuperation zone of the clinker cooler at such a point that the partial gas stream flows into the cylindrical rotary furnace (19) and not into the tertiary air conduit (43).

## Revendications

1. Installation pour le traitement thermique de matières farineuses en particulier dans le cas de la fabrication de clinker à partir d'une farine crue qui est préchauffée dans au moins une ligne d'échangeur de chaleur permise en suspension dans les gaz par cyclone, parcourue par les effluents gazeux d'un four tubulaire tournant (19) et qui est calcinée dans la zone de frittage du four tubulaire rotatif (19) pour clinker, qui est refroidi dans un refroidisseur (20) monté en aval, avec une extraction partielle de gaz (27) pour extraire un courant partiel contenant des éléments polluants à partir des effluents gazeux du four rotatif avec refroidissement (28, 29) et dépoussiérage (31) du courant gazeux partiel extrait, installation caractérisée en ce que la conduite d'extraction partielle (38) des gaz (27, 37, 38) est ramenée après le refroidissement de la fraction gazeuse et le dépoussiérage de la fraction gazeuse vers le refroidisseur de clinker (20).

2. Installation selon la revendication 1, caractérisée en ce que la conduite d'extraction partielle des gaz en recirculation (38) vers le refroidisseur du clinker (20) est raccordée à la zone de récupération du refroidisseur de clinker.

3. Installation selon la revendication 2, caractérisée en ce que dans la conduite (38) d'extraction partielle des gaz en recirculation vers le refroidisseur du clinker, on monte un refroidisseur de gaz (40) avant l'introduction dans le refroidisseur de clinker.

4. Installation selon l'une des revendications 1 à 3, caractérisée en ce qu'à partir de la conduite d'extraction partielle des gaz en recirculation (37) vers le refroidisseur de clinker (20), on monte en dérivation une conduite de dérivation (41) qui conduit à un canal d'air primaire du brûleur du four rotatif (39).

5. Installation selon la revendication 2, caractérisée en ce que la conduite d'extraction partielle des gaz (38) en recirculation vers le refroidisseur de clinker (20) débouche dans la zone de récupération du refroidisseur de clinker, en un endroit tel que le courant gazeux partiel s'écoule dans le four tubulaire rotatif (19) et pas dans la conduite d'air tertiaire (43).